# EUROPEAN PATENT APPLICATION

(11) **EP 2 947 811 A1**
(43) Date of publication of application: **25.11.2015**
(21) Application number: 13876088.9
(22) Date of filing: 05.06.2013
(51) Int. Cl.: H04L 9/08

(54) **METHOD, SERVER, HOST AND SYSTEM FOR PROTECTING DATA SECURITY**

(71) Applicant: Huawei Technologies Co., Ltd., Longgang District Shenzhen, Guangdong 518129 (CN)
(72) Inventor: SHI, Xun, Shenzhen Guangdong 518129 (CN); YE, Sihai, Shenzhen Guangdong 518129 (CN)
(74) Representative: Lord, Michael
(86) International application number: PCT/CN2013/076789
(87) International publication number: WO 2014/194494

(57) **Abstract**

The present invention discloses a method, a server, a host, and a system for protecting data security. A server generates a cloud feature value that uniquely corresponds to the server, binds a data encryption key required by the host to generate data encryption key ciphertext, and then transmits the data encryption key ciphertext and the cloud feature value to the host; and the host decrypts the ciphertext by using the cloud feature value to obtain a data encryption key to be allocated to a user, so that security protection on user data is performed based on the cloud feature value, thereby improving data security.

## Description

### TECHNICAL FIELD

The present invention relates to the field of data processing, and in particular, to a method, a server, a host, and a system for protecting data security.

### BACKGROUND

Cloud computing is an important innovation in computing models. By effectively integrating various interconnected computing resources and implementing multi-layered virtualization and abstraction, the cloud computing effectively provides a user with large-scale computing resources in a form of a reliable service, thereby relieving the user of complex bottom-layer hardware logic, a software stack, and a network protocol.

After hosting data to a cloud environment, a cloud user has no actual control right on the data placed in the cloud environment. Therefore, a cloud encryption provider is required to protect data security in the cloud environment. Some cloud encryption providers use a Web proxy server to encrypt data on a path of data transmission; some cloud encryption providers encrypt an application program that is run on a platform; and some other cloud encryption providers focus on data in an encrypted cloud memory or an encryption service.

In a process of implementing data security protection, security protection is normally performed on the data by use of a key. Some cloud encryption providers save the key in the same cloud environment as that of the data; some cloud encryption providers outsource the key to a third party; and some other cloud encryption providers ask cloud users to manage the key themselves.

However, the prior art has at least the following problem: Security of a key provided by a cloud encryption provider for a cloud user cannot be ensured. Therefore, data in a cloud environment that relies on the key for encryption is likely to be decrypted and leaked during a process of transmission and use.

### SUMMARY

Embodiments of the present invention provide a method, a server, a host, and a system for protecting data security, so as to ensure secure transmission of data in a cloud environment.

To achieve the foregoing objective, the embodiments of the present invention adopt the following technical solutions:

In a first aspect, an embodiment of the present invention provides a server, including:
a hardware password module, configured to generate a cloud feature value, where the cloud feature value uniquely corresponds to the server, and bind each data encryption key according to the cloud feature value to obtain data encryption key ciphertext;
a cloud feature value management module, configured to control the hardware password module to generate the cloud feature value;
a cloud feature value migrating module, configured to migrate the cloud feature value to all hosts managed by the server; and
a key management module, configured to allocate a data encryption key to a user served by each host, and transmit the data encryption key ciphertext to a corresponding host.

With reference to the first aspect, in a first possible implementation manner, the key management module is further configured to transmit the data encryption key ciphertext to corresponding user equipments;
or configured to transmit the data encryption key ciphertext to magnetic disk encryption proxy devices.

With reference to the first aspect or the first possible implementation manner of the first aspect, in a second possible implementation manner, the hardware password module is a trusted platform module TPM or a trusted cryptography module TCM.

In a second aspect, an embodiment of the present invention provides a host, including:
a cloud feature value migrating module, configured to obtain a cloud feature value, where the cloud feature value uniquely corresponds to a server managing the host;
a hardware password module, configured to obtain data encryption key ciphertext, and unbind the data encryption key ciphertext according to the cloud feature value to obtain a data encryption key, where the data encryption key is a data encryption key to be allocated by the server to a user served by the host; and
a data encrypting and decrypting module, configured to encrypt and decrypt, according to the data encryption key, user data managed by the host.

With reference to the second aspect, in a first possible implementation manner, the hardware password module is further configured to store the cloud feature value and the data encryption key ciphertext.

With reference to the first possible implementation manner of the second aspect, in a second possible implementation manner, the hardware password module is specifically configured to directly obtain the data encryption key ciphertext from the server managing the host;
or configured to receive the data encryption key ciphertext transmitted by a user equipment;
or configured to receive the data encryption key ciphertext transmitted by a magnetic disk encryption proxy device.

With reference to the second possible implementation manner of the second aspect, in a third possible implementation manner, the hardware password module is a trusted platform module TPM or a trusted cryptography module TCM.

In a third aspect, an embodiment of the present invention provides a method for protecting data security, including:
generating, by a server, a cloud feature value, and migrating the cloud feature value to all hosts managed by the server, where the cloud feature value uniquely corresponds to the server;
allocating, by the server, a data encryption key to a user served by each host; and
binding, by the server, each data encryption key according to the cloud feature value to obtain data encryption key ciphertext, and transmitting the data encryption key ciphertext to a corresponding host.

With reference to the third aspect, in a first possible implementation manner, the transmitting the data encryption key ciphertext to a corresponding host includes:
directly transmitting the data encryption key ciphertext to the corresponding host;
or transmitting the data encryption key ciphertext to a corresponding user equipment, and then transmitting, by using the user equipment, the data encryption key ciphertext to a host serving the user equipment;
or transmitting the data encryption key ciphertext to a magnetic disk encryption proxy device, and then transmitting the data encryption key ciphertext to the hosts by using the magnetic disk encryption proxy device.

With reference to the second possible implementation manner of the third aspect, in a third possible implementation manner, the generating, by a server, a cloud feature value includes:
generating, by the server, the cloud feature value according to a storage root key stored in a hardware password module inside the server, where the hardware password module is a trusted platform module TPM or a trusted cryptography module TCM.

With reference to the third aspect, in a fourth possible implementation manner, the binding, by the server, each data encryption key according to the cloud feature value to obtain data encryption key ciphertext includes:
setting, by the server, the cloud feature value to be platform configuration information of the server; and
encrypting, by the server, each data encryption key according to the platform configuration information to obtain the data encryption key ciphertext.

With reference to the third aspect or the foregoing four possible implementation manners of the third aspect, the cloud feature value is a migratable key.

In a fourth aspect, an embodiment of the present invention provides a method for protecting data security, including:
obtaining, by a host, a cloud feature value and data encryption key ciphertext, where the cloud feature value uniquely corresponds to a server managing the host;
unbinding, by the host, the data encryption key ciphertext according to the cloud feature value to obtain a data encryption key, where the data encryption key is a data encryption key to be allocated by the server to a user served by the host; and
encrypting and decrypting, by the host according to the data encryption key, user data managed by the host.

With reference to the fourth aspect, in a first possible implementation manner, the obtaining, by a host, a cloud feature value includes:
receiving, by the host, the cloud feature value migrated to the host by the server managing the host.

With reference to the fourth aspect, in a second possible implementation manner, the obtaining, by a host, data encryption key ciphertext includes:
directly obtaining the data encryption key ciphertext from the server managing the host;
or receiving the data encryption key ciphertext transmitted by a user equipment;
or receiving the data encryption key ciphertext transmitted by a magnetic disk encryption proxy device.

With reference to the fourth aspect or the foregoing two possible implementation manners of the fourth aspect, in a third possible implementation manner, the unbinding, by the host, the data encryption key ciphertext according to the cloud feature value includes:
setting the cloud feature value to be platform configuration information of the host; and
decrypting the data encryption key ciphertext according to the platform configuration information.

With reference to the fourth aspect or the foregoing three possible implementation manners of the fourth aspect, in a third possible implementation manner, after the obtaining, by a host, a cloud feature value and data encryption key ciphertext, the method further includes:
storing the cloud feature value and the data encryption key ciphertext into a hardware password module inside the host, where the hardware password module is a trusted platform module TPM or a trusted cryptography module TCM.

In a fifth aspect, an embodiment of the present invention provides a system for protecting data security, including:
a server, configured to generate a cloud feature value and migrate the cloud feature value to all hosts managed by the server, where the cloud feature value uniquely corresponds to the server; allocate a data encryption key to a user served by each host; and bind each data encryption key according to the cloud feature value to obtain data encryption key ciphertext, and transmit the data encryption key ciphertext to a corresponding host; and
a host, configured to obtain the cloud feature value and the data encryption key ciphertext; unbind the data encryption key ciphertext according to the cloud feature value to obtain a data encryption key; and encrypt and decrypt, according to the data encryption key, user data managed by the host.

According to the method, the server, the host, and the system for protecting data security provided by the embodiments of the present invention, a server generates a cloud feature value that uniquely corresponds to the server, binds data encryption keys required by the host together to generate data encryption key ciphertext, and then transmits the data encryption key ciphertext and the cloud feature value to the host; and the host decrypts the ciphertext by using the cloud feature value to obtain a data encryption key to be allocated to a user, so that security protection on user data is performed based on the cloud feature value. If encrypted data is leaked to another data environment, the data encryption key cannot be decrypted to obtain real data because there is no corresponding cloud feature value, thereby greatly improving data security.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings described hereinafter are only some embodiments of the present invention.
FIG. 1 is a flowchart of a method for protecting data security provided in an embodiment of the present invention;
FIG. 2 is a flowchart of a method for binding data encryption keys provided in an embodiment of the present invention;
FIG. 3 is a flowchart of another method for protecting data security provided in an embodiment of the present invention;
FIG. 4 is a flowchart of another method for protecting data security provided in an embodiment of the present invention;
FIG. 5 is a composition block diagram of a system for protecting data security provided in an embodiment of the present invention;
FIG. 6 is a composition block diagram of a server provided in an embodiment of the present invention;
FIG. 7 is a composition block diagram of a host provided in an embodiment of the present invention;
FIG. 8 is a composition block diagram of another server provided in an embodiment of the present invention; and
FIG. 9 is a composition block diagram of another host provided in an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention.

An embodiment of the present invention provides a method for protecting data security, which may be applied to a cloud service system. The cloud service system is configured to manage storage and transmission of user data, and mainly includes a server and several hosts, and a plurality of virtual machines may be run simultaneously on each host to provide a service to as many users as possible.

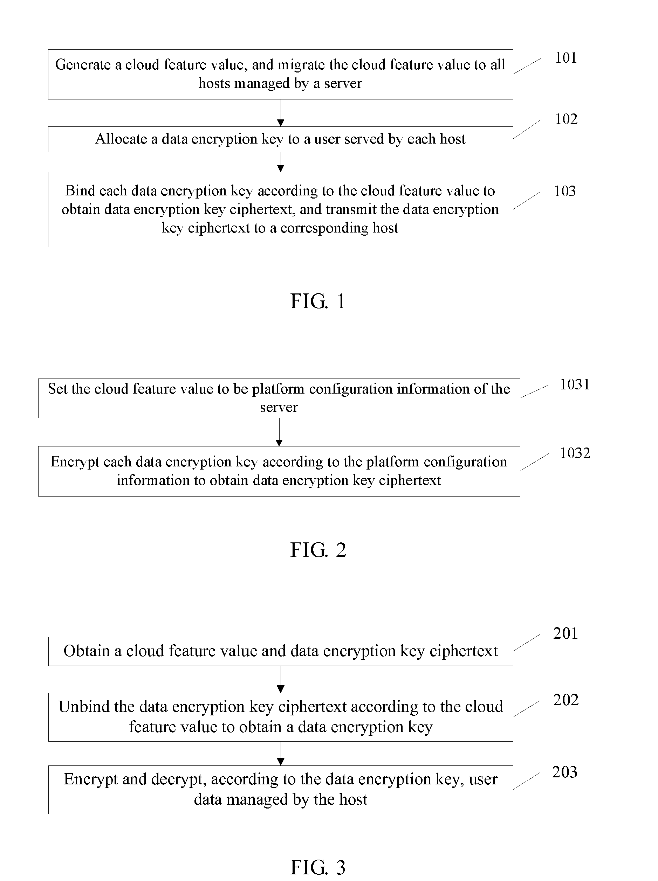

Referring to FIG. 1, a method implemented by a server side includes:

101: Generate a cloud feature value, and migrate the cloud feature value to all hosts managed by a server.

The cloud feature value uniquely corresponds to the server. A manner for generating the cloud feature value may be generating the cloud feature value according to a storage root key stored in a hardware password module inside the server, where the hardware password module is a trusted platform module (Trusted Platform Module, TPM for short) or a trusted cryptography module (Trusted Cryptography Module, TCM for short).

It should be noted that, the storage root key (Storage Root Key, SRK for short) is a parameter inside the hardware password module, where the parameter is unique and cannot be obtained by a person or a device outside the hardware password module. As a primary key (also called a master key), the storage root key is stored in a security zone and is used to encrypt secondary key information to generate a secondary key. In this way, a hierarchical key tree structure with the SRK as a root node is formed, and in this tree structure, a parent node encrypts and protects a child node. In the hierarchical key tree, a leaf node is various data encryption keys and a key implementing a data signature. The cloud feature value is a migratable key selected from keys in the hierarchical key tree except the SRK, where a selecting method may be selected according to a predetermined rule or selected randomly.

In practical implementation, by using a predetermined machine operating instruction, an operator of the server may control the hardware password module, such as the TPM or the TCM, to generate a key, and this procedure follows a standardized specification of the Trusted Computing Group (Trusted Computing Group, TCG for short).

In this embodiment, specific steps of generating the cloud feature value are described based on the standardized specification of the TCG and by using an example that the hardware password module is a TPM, where the specific steps include:
transmitting, by a TPM driver, a TPM_OSAP command to the TPM, where the command carries authorization information of a storage root key and is used to request the TPM to authenticate use authorization of the storage root key; after TPM authorization is authenticated, transmitting a TPM_CreateWrapKey command to the TPM to request creation of a new key to be migrated, and specifying one parent key from a hierarchical key tree, where the parent key is used to encapsulate the new key to be migrated; in this case, creating, by an RSA engine of the TPM, one new RSA key, setting authorization information for the new key, and then encrypting the new key by using the parent key. In this case, the newly created RSA key is the cloud feature value.

In this embodiment, specific steps of migrating the cloud feature value are described based on the standardized specification of the TCG and by using an example that the hardware password module is a TPM, where the specific steps include:
authorizing, by a TPM owner of a server, a migrating protection key public key of a TPM of a host to generate an authorized block, where the authorized block indicates that the TPM of the server is allowed to migrate the cloud feature value to the TPM of the host and use the migrating protection key public key as a parent key; creating, by a TPM user of the server, a migrating block by using the authorized block, where the migrating block includes a to-be-migrated key data block encrypted by using the migrating protection key public key; receiving, by the TPM of the host, the migrating block, transforming the migrating block into an encrypted block protected by the TPM of the host, and then loading the migrated cloud feature value by using a key loading command TPM_Load_Key.
102: Allocate a data encryption key to a user served by each host.

A method for allocating a data encryption key may be specifically set according to affiliation information of a user. For example, only one data encryption key may be allocated to users affiliated to the same corporation; that is, the users in the same corporation may use the same data encryption key to access and transmit data, which may improve an effect of data sharing. Regarding users in different corporations, different data encryption keys need to be set to implement information isolation.
103: Bind each data encryption key according to the cloud feature value to obtain data encryption key ciphertext, and transmit the data encryption key ciphertext to a corresponding host.

For a binding method, reference may be made to the method procedure illustrated in FIG. 2, which includes:
1031: Set the cloud feature value to be platform configuration information of the server.

It should be noted that, the present invention is intended to use the cloud feature value as a cloud environment managed by the same server so as to isolate the cloud environment from other data environments; given that a binding manner of the TPM or the TCM requires platform configuration information, the cloud feature value is used as the platform configuration information to indicate that an identity of the cloud environment is different from those of other data environments.
1032: Encrypt each data encryption key according to the platform configuration information to obtain the data encryption key ciphertext.

It should be noted that, the method procedure needs to be implemented in the hardware password module of the server. A specific encryption algorithm thereof varies with an implementation manner of the hardware password module, which is, for example, implementation by using the TPM or implementation by using the TCM. However, an overall procedure may be implemented with reference to the standard procedure specified by the TCG, and the platform configuration information is a necessary parameter in the procedure.

A method for implementing the transmitting the data encryption key ciphertext to a corresponding host may be implemented according to actual requirements in the following three implementation manners, which include:

The first implementation manner: Directly transmit the data encryption key ciphertext to the corresponding host.

In this case, the hosts are required to store the data encryption key ciphertext directly.

The second implementation manner: Transmit the data encryption key ciphertext to a corresponding user equipment, and transmit, by using the user equipment, the data encryption key ciphertext to the hosts serving the user equipment.

The user equipment may be a device used for encryption and authentication, such as a USB Key.

The third implementation manner: Transmit the data encryption key ciphertext to a magnetic disk encryption proxy device, and transmit the data encryption key ciphertext to the hosts by using the magnetic disk encryption proxy device.

The magnetic disk encryption proxy device is generally a third-party encryption device except the server, the host, and the user equipment, and is specifically configured to encrypt data of a specific device.

In this embodiment, the cloud feature value that uniquely corresponds to the server is generated in the server, and the data encryption keys allocated to the users are encrypted by using the cloud feature value, so that security protection is performed on all user data based on the cloud feature value. If encrypted data is leaked to another data environment, the data encryption key cannot be decrypted to obtain real data because there is no corresponding cloud feature value, thereby greatly improving data security.

Referring to FIG. 3, a method implemented by a host side includes:
201: Obtain a cloud feature value and data encryption key ciphertext.

The cloud feature value uniquely corresponds to a server managing a host, and for specific descriptions, reference may be made to the relevant descriptions in step 101.

In this embodiment, the data encryption key ciphertext is generally an encryption result of encrypting (that is, binding), by a server according to the cloud feature value and in a hardware password module inside the server, data encryption keys allocated to users.

It should be noted that, in order to ensure security of the cloud feature value on the host side, the obtained cloud feature value generally needs to be stored in the hardware password module of the host, where the hardware password module includes a hardware device such as a TPM or a TCM. The data encryption key ciphertext may be stored in the hardware password module of the host or in a hard disk.

Moreover, it should be noted that, a method for obtaining the data encryption key ciphertext by the host may vary with an actual requirement. The embodiment of the present invention provides the following three manners, which include:

The first manner: Directly obtain the data encryption key ciphertext from the server managing the host.

In this case, the host is required to store the data encryption key ciphertext directly.

The second manner: Receive the data encryption key ciphertext transmitted by a user equipment.

The user equipment may be a device used for encryption and authentication, such as a USB Key.

The third manner: Receive the data encryption key ciphertext transmitted by a magnetic disk encryption proxy device.

The magnetic disk encryption proxy device is generally a third-party encryption device except the server, the host, and the user equipment, and is specifically configured to encrypt data of a specific device.
202: Unbind the data encryption key ciphertext according to the cloud feature value to obtain a data encryption key.

An unbinding procedure in step 202 corresponds to the binding procedure in step 103, and a specific implementation manner thereof may be implemented by performing a reverse operation with reference to the steps described in step 103. Specifically, step 202 includes: setting the cloud feature value to be platform configuration information of the host; and decrypting the data encryption key ciphertext according to the platform configuration information.
203: Encrypt and decrypt, according to the data encryption key, user data managed by the host.

It should be noted that, in the embodiment of the present invention, user data that needs to be encrypted includes user data stored in a physical hard disk, user data transmitted between different virtual machines in a host, and user data transmitted between different virtual machines of different hosts; and data that needs to be decrypted includes data that needs to be provided to the user for use inside the host.

In this embodiment, the cloud feature value that uniquely corresponds to the server and is generated in the server, and key ciphertext for data encryption and decryption are obtained, and the ciphertext is decrypted by using the cloud feature value to obtain the data encryption keys to be allocated to the users, so that security protection is performed on all user data based on the cloud feature value. If encrypted data is leaked to another data environment, the data encryption key cannot be decrypted to obtain real data because there is no corresponding cloud feature value, thereby greatly improving data security.

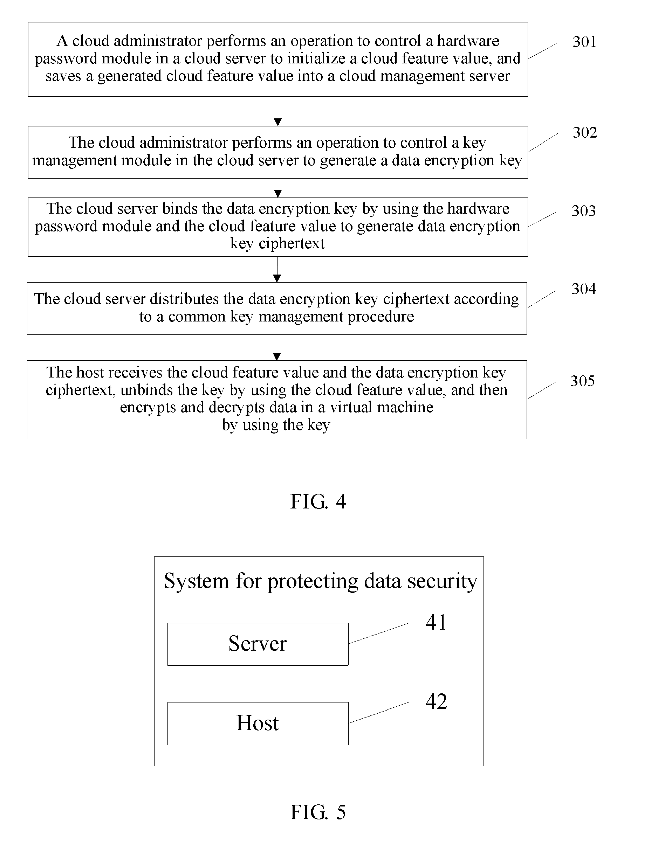

During a process of implementing the technical solutions provided by the present invention, this embodiment may be applied to a cloud environment. In this case, the server may be set as a cloud server. In the cloud environment, for the specific implementation method of the foregoing procedure, reference may be made to FIG. 4, which includes:
301: A cloud administrator performs an operation to control a hardware password module in a cloud server to initialize a cloud feature value, and saves a generated cloud feature value into a cloud management server.

The cloud administrator may refresh the cloud feature value periodically to improve data security.
302: The cloud administrator performs an operation to control a key management module in the cloud server to generate a data encryption key.
303: The cloud server binds the data encryption key by using the hardware password module and the cloud feature value to generate data encryption key ciphertext.

In this case, any device can unbind the data encryption key ciphertext to obtain a data encryption key for use only when the hardware password module is available and the cloud feature value is obtained. At an installation and deployment stage of cloud computing infrastructure, the cloud administrator performs an operation to generate a data encryption key, and encrypts and protects the key by using the cloud feature value, where the generated key is saved in the cloud management server. The data encryption key may be refreshed periodically to improve data security.

When a new host is added to the cloud infrastructure, the cloud management server migrates the saved cloud feature value to the host automatically. A negotiation mechanism specified in a TCG standard may be used in a migrating process, so at to ensure security of the migrating process.
304: The cloud server distributes the data encryption key ciphertext according to a common key management procedure.

For example, the server distributes the data encryption key ciphertext into a USB Key of a user, or distributes the data encryption key ciphertext into a magnetic disk encryption proxy of a virtual machine inside a host.
305: The host receives the cloud feature value and the data encryption key ciphertext, unbinds the key by using the cloud feature value, and then encrypts and decrypts data in a virtual machine by using the key.

A data encryption function may be provided by a magnetic disk encryption proxy or a file encryption proxy in a virtual machine, and may also be provided by a transparent encryption and decryption function in a virtual machine manager. If the transparent encryption and decryption function is provided in the virtual machine manager, it may be implemented that data saved in a memory or sent to a network is all ciphertext, and data in a memory, when used by a virtual machine user, is all plain text.

In the embodiment, the server generates the cloud feature value that uniquely corresponds to the server, binds, by using the cloud feature value, data encryption keys required by the host together to generate data encryption key ciphertext, and then transmits the data encryption key ciphertext and the cloud feature value to the host; and the host decrypts the ciphertext by using the cloud feature value to obtain a data encryption key to be allocated to a user, so that security protection on user data is performed based on the cloud feature value. If encrypted data is leaked to another data environment, the data encryption key cannot be decrypted to obtain real data because there is no corresponding cloud feature value, thereby greatly improving data security.

Another embodiment of the present invention provides a system for protecting data security, which, as shown in FIG. 5, includes a server 41 and at least one host 42. The system for protecting data security may be configured to implement all the method procedures on the server side and the host side as illustrated in FIG. 1 to FIG. 4.

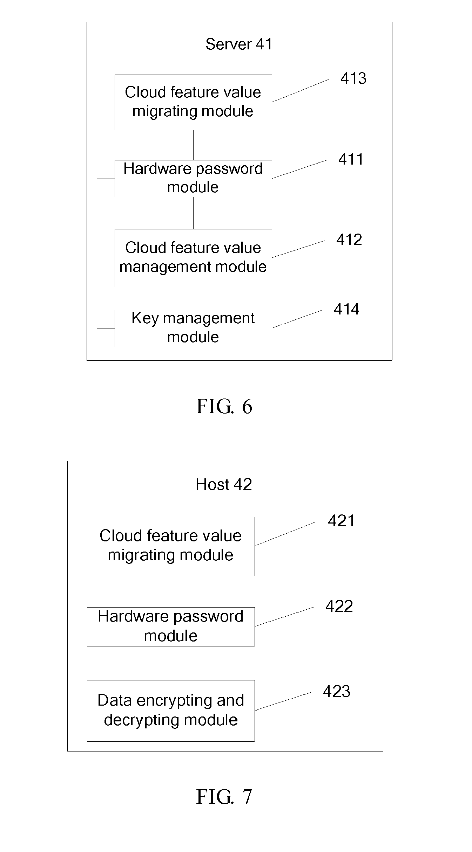

Referring to FIG. 6, a server provided in this embodiment includes: a hardware password module 411, a cloud feature value management module 412, a cloud feature value migrating module 413, and a key management module 414.

The hardware password module 411 is configured to generate a cloud feature value, where the cloud feature value uniquely corresponds to the server, and bind each data encryption key according to the cloud feature value to obtain data encryption key ciphertext.

The cloud feature value management module 412 is configured to control the hardware password module 411 to generate the cloud feature value.

The cloud feature value migrating module 413 is configured to migrate the cloud feature value to all hosts managed by the server.

The key management module 414 is configured to allocate a data encryption key to a user served by each host, and transmit the data encryption key ciphertext to a corresponding host.

The key management module 414 is further configured to transmit the data encryption key ciphertext to corresponding user equipments; or configured to transmit the data encryption key ciphertext to magnetic disk encryption proxy devices.

A function of the hardware password module 411 may be implemented by a trusted platform module TPM or a trusted cryptography module TCM.

Referring to FIG. 7, a host provided in this embodiment includes: a cloud feature value migrating module 421, a hardware password module 422, and a data encrypting and decrypting module 423.

The cloud feature value migrating module 421 is configured to obtain a cloud feature value, where the cloud feature value uniquely corresponds to a server managing the host.

The hardware password module 422 is configured to obtain data encryption key ciphertext, and unbind the data encryption key ciphertext according to the cloud feature value to obtain a data encryption key, where the data encryption key is a data encryption key to be allocated by the server to a user served by the host.

The data encrypting and decrypting module 423 is configured to encrypt and decrypt, according to the data encryption key, user data managed by the host.

The hardware password module 422 is further configured to store the cloud feature value and the data encryption key ciphertext.

The hardware password module 422 is specifically configured to directly obtain the data encryption key ciphertext from the server managing the host; or configured to receive the data encryption key ciphertext transmitted by a user equipment; or configured to receive the data encryption key ciphertext transmitted by a magnetic disk encryption proxy device.

The hardware password module 422 may be a trusted platform module TPM or a trusted cryptography module TCM.

In the embodiment, the server generates the cloud feature value that uniquely corresponds to the server, binds, by using the cloud feature value, data encryption keys required by the host together to generate data encryption key ciphertext, and then transmits the data encryption key ciphertext and the cloud feature value to the host; and the host decrypts the ciphertext by using the cloud feature value to obtain a data encryption key to be allocated to a user, so that security protection on user data is performed based on the cloud feature value. If encrypted data is leaked to another data environment, the data encryption key cannot be decrypted to obtain real data because there is no corresponding cloud feature value, thereby greatly improving data security.

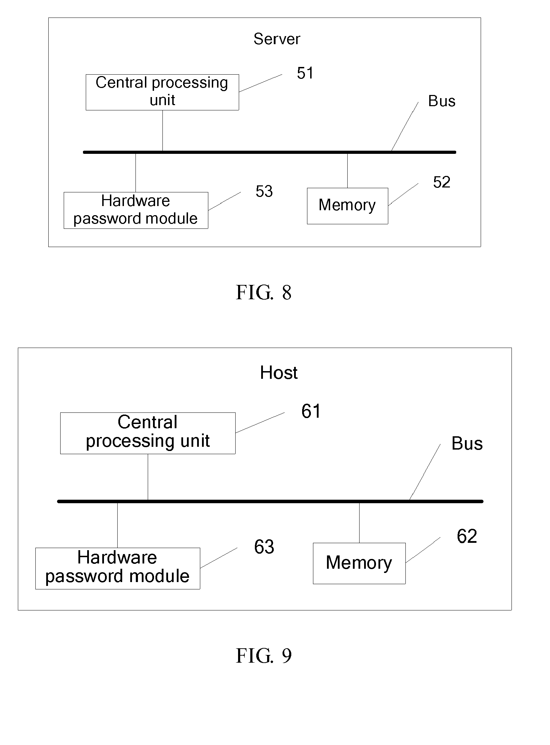

Another embodiment of the present invention provides a server, which, as shown in FIG. 8, includes at least one central processing unit 51, a memory 52, and a hardware password module 53. The memory 52 is configured with code; the central processing unit 51 may invoke the code in the memory 52 and implement the method procedures on the server side as illustrated in FIG. 1 to FIG. 5 by communicating with the hardware password module 53. All units in the server may communicate by using a bus.

The hardware password module 53 is configured to generate a cloud feature value, where the cloud feature value uniquely corresponds to the server, and bind each data encryption key according to the cloud feature value to obtain data encryption key ciphertext.

The central processing unit 51 is configured to control the hardware password module 53 to generate the cloud feature value; migrate the cloud feature value to all hosts managed by the server; allocate a data encryption key to a user served by each host; and transmit the data encryption key ciphertext to a corresponding host.

The memory 52 is further configured to store the data encryption key ciphertext.

The central processing unit 51 is further configured to transmit the data encryption key ciphertext to corresponding user equipments; or configured to transmit the data encryption key ciphertext to magnetic disk encryption proxy devices.

A function of the hardware password module 53 may be implemented by a trusted platform module TPM or a trusted cryptography module TCM.

An embodiment of the present invention further provides a host, which, as shown in FIG. 9, includes at least one central processing unit 61, a memory 62, and a hardware password module 63. The memory 62 is configured with code; the central processing unit 61 may invoke the code in the memory 62 and implement the method procedures on the host side as illustrated in FIG. 1 to FIG. 5 by communicating with the hardware password module 63. All units in the host may communicate by using a bus.

The central processing unit 61 is configured to obtain a cloud feature value, where the cloud feature value uniquely corresponds to a server managing the host; and encrypt and decrypt, according to the data encryption key, user data managed by the host.

The hardware password module 63 is configured to obtain data encryption key ciphertext, and unbind the data encryption key ciphertext according to the cloud feature value to obtain a data encryption key, where the data encryption key is a data encryption key to be allocated by the server to a user served by the host.

The hardware password module 63 is further configured to store the cloud feature value and the data encryption key ciphertext.

The hardware password module 63 is specifically configured to directly obtain the data encryption key ciphertext from the server managing the host; or configured to receive the data encryption key ciphertext transmitted by a user equipment; or configured to receive the data encryption key ciphertext transmitted by a magnetic disk encryption proxy device.

In the embodiment, the server generates the cloud feature value that uniquely corresponds to the server, binds, by using the cloud feature value, data encryption keys required by the host together to generate data encryption key ciphertext, and then transmits the data encryption key ciphertext and the cloud feature value to the host; and the host decrypts the ciphertext by using the cloud feature value to obtain a data encryption key to be allocated to a user, so that security protection on user data is performed based on the cloud feature value. If encrypted data is leaked to another data environment, the data encryption key cannot be decrypted to obtain real data because there is no corresponding cloud feature value, thereby greatly improving data security.

According to the foregoing description of the implementation manners, those skilled in the art may clearly understand that the present invention may be implemented by using software together with necessary universal hardware; certainly, the present invention may also be implemented by using hardware, but in many cases the former is a better implementation manner. Based on such an understanding, the technical solutions of the present invention essentially or the part contributing to the prior art may be implemented in a form of a software product. The software product is stored in a readable storage medium, such as a floppy disk, a hard disk, or an optical disc of a computer, and includes several instructions for instructing a computer device (which may be a personal computer, a server, or a network device) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A server, comprising:
a hardware password module, configured to generate a cloud feature value, wherein the cloud feature value uniquely corresponds to the server, and bind each data encryption key according to the cloud feature value to obtain data encryption key ciphertext;
a cloud feature value management module, configured to control the hardware password module to generate the cloud feature value;
a cloud feature value migrating module, configured to migrate the cloud feature value to all hosts managed by the server; and
a key management module, configured to allocate a data encryption key to a user served by each host, and transmit the data encryption key ciphertext to a corresponding host.

2. The server according to claim 1, wherein the key management module is further configured to transmit the data encryption key ciphertext to corresponding user equipments;
or configured to transmit the data encryption key ciphertext to magnetic disk encryption proxy devices.

3. The server according to claim 1 or 2, wherein the hardware password module is a trusted platform module TPM or a trusted cryptography moduleTCM.

4. A host, comprising:
a cloud feature value migrating module, configured to obtain a cloud feature value, wherein the cloud feature value uniquely corresponds to a server managing the host;
a hardware password module, configured to obtain data encryption key ciphertext, and unbind the data encryption key ciphertext according to the cloud feature value to obtain a data encryption key, wherein the data encryption key is a data encryption key to be allocated by the server to a user served by the host; and
a data encrypting and decrypting module, configured to encrypt and decrypt, according to the data encryption key, user data managed by the host.

5. The host according to claim 4, wherein the hardware password module is further configured to store the cloud feature value and the data encryption key ciphertext.

6. The host according to claim 4, wherein the hardware password module is specifically configured to directly obtain the data encryption key ciphertext from the server managing the host;
or configured to receive the data encryption key ciphertext transmitted by a user equipment;
or configured to receive the data encryption key ciphertext transmitted by a magnetic disk encryption proxy device.

7. The host according to any one of claim 4 to 6, wherein the hardware password moduleis a trusted platform module TPM, or a trusted cryptography module TCM.

8. A method for protecting data security, comprising:
generating, by a server, a cloud feature value, and migrating the cloud feature value to all hosts managed by the server, wherein the cloud feature value uniquely corresponds to the server;
allocating, by the server, a data encryption key to a user served by the hosts; and
binding, by the server, each data encryption key according to the cloud feature value to obtain data encryption key ciphertext, and transmitting the data encryption key ciphertext to a corresponding host.

9. The method according to claim 8, wherein the transmitting the data encryption key ciphertext to a corresponding host comprises:
directly transmitting the data encryption key ciphertext to the corresponding host;
or transmitting the data encryption key ciphertext to a corresponding user equipment, and then transmitting, by using the user equipment, the data encryption key ciphertext to a host serving the user equipment;
or transmitting the data encryption key ciphertext to a magnetic disk encryption proxy device, and then transmitting the data encryption key ciphertext to the hosts by using the magnetic disk encryption proxy device.

10. The method according to claim 8, wherein the generating, by a server, a cloud feature value comprises:
generating, by the server, the cloud feature value according to a storage root key stored in a hardware password module inside the server, wherein the hardware password module is a trusted platform module TPM or a trusted cryptography module TCM.

11. The method according to claim 8, wherein the binding, by the server, each data encryption key according to the cloud feature value to obtain data encryption key ciphertext comprises:
setting, by the server, the cloud feature value to be platform configuration information of the server; and
encrypting, by the server, each data encryption key according to the platform configuration information to obtain the data encryption key ciphertext.

12. The method according to any one of claims 8 to 11, wherein the cloud feature value is a migratable key.

13. A method for protecting data security, comprising:
obtaining, by a host, a cloud feature value and data encryption key ciphertext, wherein the cloud feature value uniquely corresponds to a server managing the host;
unbinding, by the host, the data encryption key ciphertext according to the cloud feature value to obtain a data encryption key, wherein the data encryption key is a data encryption key to be allocated by the server to a user served by the host; and
encrypting and decrypting, by the host according to the data encryption key, user data managed by the host.

14. The method according to claim 13, wherein the obtaining, by a host, a cloud feature value comprises:
receiving, by the host, the cloud feature value migrated to the host by the server managing the host.

15. The method according to claim 13, wherein the obtaining, by a host, data encryption key ciphertext comprises:
directly obtaining the data encryption key ciphertext from the server managing the host;
or receiving the data encryption key ciphertext transmitted by a user equipment;
or receiving the data encryption key ciphertext transmitted by a magnetic disk encryption proxy device.

16. The method according to any one of claim 13 to 15, wherein the unbinding, by the host, the data encryption key ciphertext according to the cloud feature value comprises:
setting the cloud feature value to be platform configuration information of the host; and
decrypting the data encryption key ciphertext according to the platform configuration information.

17. The method according to claim 16, wherein after the obtaining, by the host, the cloud feature value, the method comprises:
storing the cloud feature value into a hardware password module inside the host, wherein the hardware password module is a trusted platform module TPM or a trusted cryptography module TCM.

18. A system for protecting data security, comprising:
a server, configured to generate a cloud feature value and migrate the cloud feature value to all hosts managed by the server, wherein the cloud feature value uniquely corresponds to the server; allocate a data encryption key to a user served by each hosts; and bind each data encryption key according to the cloud feature value to obtain data encryption key ciphertext, and transmit the data encryption key ciphertext to a corresponding host; and
a host, configured to obtain the cloud feature value and the data encryption key ciphertext; unbind the data encryption key ciphertext according to the cloud feature value to obtain a data encryption key; and encrypt and decrypt, according to the data encryption key, user data managed by the host.
